# EUROPÄISCHE PATENTSCHRIFT

(11) **EP 0 705 507 B1**
(45) Veröffentlichungstag und Bekanntmachung des Hinweises auf die Patenterteilung: **05.03.1997**
(21) Anmeldenummer: 94913006.6
(22) Anmeldetag: 15.04.1994
(51) Int. Cl.: H04J 3/16, H04Q 11/04, H04L 12/64

(54) **VERFAHREN ZUM UMSETZEN DIGITALER DATENSTRÖME MIT ATM-ZELLENSTRUKTUR**
PROCESS FOR CONVERTING DIGITAL DATA FLOWS WITH ATM CELL STRUCTURE
PROCEDE PERMETTANT DE CONVERTIR DES FLUX DE DONNEES NUMERIQUES AVEC UNE STRUCTURE A CELLULES A MODE DE TRANSFERT ASYNCHRONE (MTA)

(30) Priorität: 16.04.1993 DE 4315420
(43) Veröffentlichungstag der Anmeldung: 10.04.1996
(73) Patentinhaber: SIEMENS AKTIENGESELLSCHAFT, 80333 München (DE)
(72) Erfinder: WOLF, Andreas, D-12157 Berlin (DE); ARWEILER, Hans-Werner, D-12161 Berlin (DE)
(86) Internationale Anmeldenummer: DE9400427
(87) Internationale Veröffentlichungsnummer: WO9424787

(56) Entgegenhaltungen:
- EP-A- 0 468 818
- US-A- 4 612 636
- SUPERCOMM/ICC 1992, Bd.1 OF 4, 14. Juni 1992, CHICAGO Seiten 281 - 285, XP000326884 H. UEMATSU & H. UEDA 'STM Signal Transfer Techniques in ATM Networks.'

## Beschreibung

In der Daten-Übertragungstechnik sind verschiedene Daten-Organisationsstrukturen für Datenströme bekannt. Eine beispielsweise im Zusammenhang mit der Verbreitung des Breitband-ISDN (B-ISDN) zunehmend verwendete Organisationsstruktur ist der sogenannte Asynchrone-Transfer-Modus (ATM), bei dem die Datenzellen des Datenstroms im sogenannten ATM-Zellenformat (nachfolgend: ATM-Datenzellen) strukturiert sind. Die an sich bekannten prinzipiellen Grundlagen des Asynchronen-Transfer-Modus (ATM) sind beispielsweise in "Grundlagen der Vermittlungstechnik", G. Siegmund, Decker-Verlag, 1992, S. 377 - 389 und in der DE-A1-40 12 850 beschrieben. Die ATM-Datenzellen haben einen u.a. der Adressierung, Identifizierung und Prüfung dienenden Zellenkopf (header) und ein mit Nutzdaten belegbares Datenfeld (payload). Es sind Meß- und Prüfgeräte bekannt (z. B. aus dem Katalog "The First Total Testing Solution for Broadband" Nr.5091-7305E, 1993, der Firma HEWLETT PACKHARD unter der Bezeichnung HP 75 000 oder aus dem Katalog "ATM Test System ME3505A" Nr. ME 3505A-1, 1990, der Firma ANRITSU CORP., TOKYO, JAPAN), die für die Untersuchung von Datenübertragungs- und/oder Datenverarbeitungs-Systemen ausgelegt sind, deren Datenströme ausschließlich aus ATM-Datenzellen (nachfolgend: reiner ATM-Datenzellen-Strom) bestehen. Diese Gerate weisen eine Schnittstelle auf, über die die ATM-Datenzellen zur weiteren Auswertung in eine Eingangsstufe des Meß- oder Prüfgerätes eingelesen und bedarfsweise gegebenenfalls zusammen mit Meßergebnissen über eine Ausgangsstufe des Meßgerates ausgegeben werden können. Eingangsstufe und Ausgangsstufe sind gewöhnlich über einen sogenannten "Local-Bus" miteinander zum Datenaustausch verbunden.

Aus "ntz", Band 45, 1992, Heft 2, Seite 92 ist eine Generator-Analysator-Anwendung bei ATM-Datenzellen bekannt, wobei ein Schnittstellenmodul auf eine B-ISDN-Übertragungsleitung zugreift, um einen Datenstrom von zwei ATM-Datenzellen zu analysieren oder zu erzeugen. Das Schnittstellenmodul trennt dabei Anrufsignale von den Datensignalen. Anschließend werden nur die ATM-zellenstrukturierten Datensignale von einem externen Gerät (z. B. einem Logikanalysator) analysiert, während eine Weiterverarbeitung, Auswertung und/oder Manipulation der abgetrennten Anrufsignale und/oder von Steuersignalen nicht erwähnt und offenbar nicht möglich ist.

Bereits installierte Datenübertragungs- oder Datenverarbeitungs-Systeme arbeiten mit sogenannten PDH-(Plesiochrone Digitale Hierarchie)-Übertragungsverfahren, die keine ATM-Datenzellen, sondern Datenströme verwenden, die neben den Nutzdaten zusätzlich rahmenbildende Strukturdaten enthalten. Zum Begriff "plesiochron" wird auf "Pulstechnik", E. Hölzer / H. Holzwarth, Springer Verlag, 1984, Seite 312 verwiesen. Die an sich bekannten Grundlagen und Bitraten hierarchischer Verfahren sind in CCITT Rec., Vol. III, Fascicle III.3, G.702 beschrieben. Die Strukturdaten sind jeweils einem aus einer Vielzahl von Daten bestehenden Abschnitt des Datenstromes zugeordnet und nach einer vorgegebenen Vorschrift beabstandet in dem Datenstrom verteilt.

Es ist ein zunehmender Bedarf zu erwarten, die installierten Systeme mit einem Datenstrom zu betreiben, der Datenzellen in einem PDH-(Plesiochrone Digitale Hierarchie) Rahmen enthält. Bei diesem Datenstrom sind die Strukturdaten jeweils byteweise in dem Strom der ATM-Datenzellen verteilt. Die Strukturdaten (PDH-Rahmen-Informationen) unterbrechen und teilen die ATM-Zellen (beispielsweise innerhalb der Nutzfelder (payload) der ATM-Datenzellen). Ein derartiger Datenstrom ist aufgrund der beabstandet enthaltenen Strukturdaten für eine unmittelbare Untersuchung mit einem für reine ATM-Datenströme ausgelegten Gerät nicht geeignet. Gemäß CCITT Rec. G.7xx und G.7zz oder ETSI DE/TM-3007 kommen bei PDH-gerahmten ATM-Datenzellenströmen als Datenübertragungs-Geschwindigkeiten (Datenraten oder Bitraten) 2, 34 oder 140 Mbit/s zur Anwendung. Demgegenüber ist für den reinen ATM-Datenstrom eine Datenrate von 155 Mbit/s empfohlen.

Um die Strukturdaten und aus diesen gewonnene Meßergebnisse in einem vorhandenen, für reine ATM-Datenzellen ausgelegten eingangs beschriebenen Meßgerät weiterverarbeiten zu können, wäre grundsätzlich eine Einspeisung dieser Daten in den Local-Bus des Meßgerates denkbar; dies ist jedoch vergleichsweise aufwendig, da bei dem Meßgerät die Busstruktur entsprechend zu ändern wäre, was zu Konflikten mit in dem Meßgerät enthaltenen Meßbaugruppen führen kann.

Aus der DE-A1-41 21 863 ist ein Verfahren zum Betreiben eines Pufferspeichers bekannt, bei dem eingangsseitig eingelesene plesiochrone Digitalsignale an eine ausgangsseitig geforderte Datenrate angepaßt werden, indem bedarfsweise Füll- oder Stopfbits anstelle von Datenbits an definierten Positionen des abgegebenen, nicht zellenstrukturierten Datenstroms eingefügt werden. Angaben über den Inhalt der Füll- oder Stopfbits sind in der DE-A1-41 29 863 nicht enthalten.

Der Erfindung liegt die Aufgabe zugrunde, mit einfachen Mitteln ein Einlesen, Weiterverarbeiten, Auswerten, Manipulieren und/oder Ausgeben der Strukturdaten eines Datenstroms mit einem zur Verarbeitung reiner ATM-Datenzellenströme geeigneten Meßgerät zu ermöglichen. Dabei soll die zeitliche Folge der ATM-Datenzellen grundsätzlich erhalten bleiben.

Diese Aufgabe wird erfindungsgemäß gelost durch die in den Ansprüchen 1 oder 4 angegebenen Umsetzverfahren. Besonders vorteilhafte Ausgestaltungen der Erfindung sind in den Unteransprüchen angegeben.

Ein wesentlicher Vorteil der Erfindung besteht darin, daß die zeitliche Folge der in dem ersten Datenstrom enthaltenen (Patentanspruch 1) bzw. den ersten Datenstrom konstituierenden (Patentanspruch 4) ATM-Datenzellen im Vergleich zu dem zweiten Datenstrom beibehalten wird, wodurch nachfolgende Auswertungen oder Untersuchungen einfach möglich sind. Da die Zellenfolge pro Zeiteinheit und damit die Datenrate des ersten Datenstroms geringer als die des zweiten Datenstromes ist, werden in den zweiten Datenstrom an definierten Stellen Ausgleichszellen eingefügt, um eine kontinuierliche, synchrone Umsetzung zu ermöglichen. Die Datenübertragungssysteme können auch Bestandteile von Datenverarbeitungs- oder Datenbearbeitungs-Systemen, wie z. B. Meßeinrichtungen, sein.

Der übergeordnete Kerngedanke der vorliegenden Erfindung besteht darin, die Strukturdaten des ersten oder für den ersten Datenstrom(s) mittels markierter oder markierbarer Strukturzellen mit ATM-Zellenformat in den zweiten Datenstrom zu integrieren, wobei infolge der unterschiedlichen Datenraten entstehende (zunächst unbesetzte) Abschnitte in dem zweiten Datenstrom nicht etwa nur durch Leerzellen, sondern durch strukturdatenspezifisch ausgebildete ATM-Datenzellen aufgefüllt werden. Damit ist ein sehr eleganter Datenaustausch mit einem nur für reine ATM-Datenzellen-Verarbeitung geeigneten Meßgerät oder einer korrespondierenden Datenverarbeitungseinrichtung möglich.

Die ATM-Datenzellen weisen von sich aus ein vergleichsweise großes Nutzfeld (playload) auf. Gemäß einer vorteilhaften Weiterbildung der Erfindung können daher problemlos zusätzlich durch Auswertung der Strukturdaten erhaltene Ergebnisse und/oder Daten zur gezielten Änderung der Strukturdaten in die jeweilige Strukturzelle eingeschrieben werden.

Gemäß einer vorteilhaften Fortbildung der Erfindung werden zum Umsetzen des ersten Datenstromes in den zweiten Datenstrom die ATM-Datenzellen des ersten Datenstromes in einen Zellenspeicher eingeschrieben, dessen Belegungsgrad ermittelt wird, wobei der Mindest-Anfangsbelegungsgrad so bemessen wird, daß bis zum Einfügen einer nächsten Strukturzelle in den zweiten Datenstrom ein zulässiger Mindest-Belegungsgrad nicht unterschritten wird und daß außer der oder den Strukturzelle(n) bedarfsweise solange Ausgleichszellen in den zweiten Datenstrom eingefügt werden, bis der Belegungsgrad zumindest den Mindest-Anfangsbelegungsgrad wieder erreicht.

In entsprechender Ausführung sieht eine vorteilhafte Ausgestaltung des Verfahrens hinsichtlich der Umwandlung des zweiten Datenstromes in den ersten Datenstrom vor, daß die ATM-Datenzellen des zweiten Datenstroms in einen Zellenspeicher eingeschrieben werden und daß der Anfangs-Belegungsgrad und die Kapazität des Zellenspeichers so bemessen werden, daß bis zum Auftreten der jeweils nächsten Strukturzelle und/oder gegebenenfalls Ausgleichszelle(n) ein Überschreiten eines Höchst-Belegungsgrades vermieden wird.

Eine hinsichtlich der Übertragungseffizienz besonders vorteilhafte Weiterbildung der Erfindung sieht vor, daß der erste Datenstrom im Zeitmultiplex aus mehreren Teil-Datenströmen gebildet wird, wobei die Anzahl der Teil-Datenströme so bemessen wird, daß die Summe der Datenraten der Teil-Datenströme zuzüglich jedem Teil-Datenstrom individuell zugeordneter Strukturzellen kleiner als die zweite oder gleich der zweiten Datenrate ist.

Wie eingangs erwähnt, werden zum Ausgleich der unterschiedlichen Datenraten und zur Synchronisation der Datenströme bedarfsweise Ausgleichszellen in den zweiten Datenstrom eingefügt. Die Ausgleichszellen können durch eine spezielle Adressierung in ihrem Zellenkopf (header) kenntlich gemacht sein; eine bevorzugte Ausgestaltung der Erfindung sieht vor, daß die Ausgleichszellen durch Vervielfachung der jeweils einzufügenden Strukturzellen gebildet und damit besonders einfach erkennbar sind. Bei einem Betrieb des Verfahrens im obengeschilderten Zeitmultiplex können die Ausgleichszellen vorzugsweise zwischen aufeinander folgenden Strukturzellen eingefügt werden.

Besonders bevorzugt läßt sich das erfindungsgemäße Verfahren bei einem sogenannten PDH-ATM-Interface anwenden, wobei die Strukturdaten in dem ersten Datenstrom den eingangs beschriebenen PDH-Rahmen bilden.

Die Erfindung wird nachfolgend anhand einer Zeichnung beispielhaft weiter erläutert; es zeigen:
Figur 1 einen PDH-gerahmten und einen reinen ATM-Datenstrom in verschiedenen Datenübertragungs-Systemen,
Figuren 2, 3 und 4 PDH-gerahmte ATM-Datenströme,
Figur 5 Grundzüge des erfindungsgemäßen Verfahrens,
Figuren 6 und 7 detalliert den Ablauf von Umsetzungen,
Figur 8 Zusammenhänge zwischen verschiedenen Datenraten und
Figuren 9 und 10 den Belegungsgrad von bei Ausführung des erfindungsgemäßen Verfahrens verwendeten Speichern.

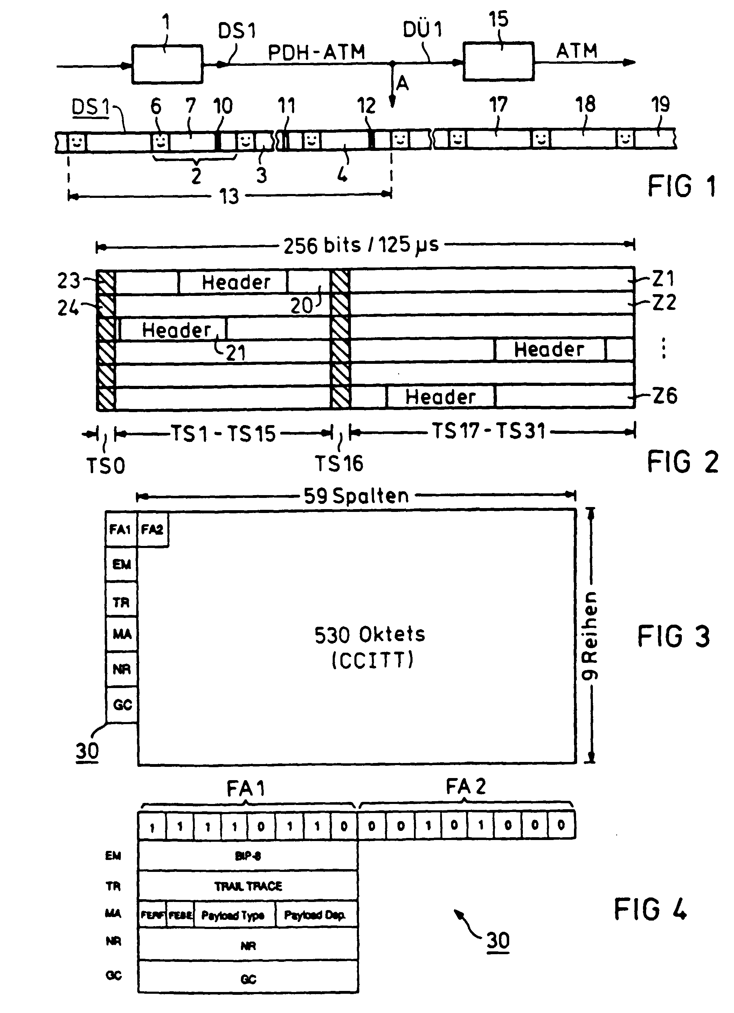

Figur 1 zeigt einen Datenverarbeitungsbaustein 1, der ausgangsseitig einen ersten Datenstrom DS1 in ein erstes Datenübertragungssystem DÜ1 mit einer ersten Datenübertragungs-Geschwindigkeit (Datenrate) von 34,368 MBit/s (nachfolgend auf 34 MBit/s abgerundet - wie auch weitere nachfolgende Datenraten-Angaben abgerundet sind) abgibt. Der erste Datenstrom DS1 enthält Datenzellen 2, 3 und 4, die ATM-(Asynchroner-Transfer-Modus)-Zellenformat haben (ATM-Datenzellen). Das ATM-Zellenformat sieht einen Zellenkopf 6 (header) und ein Nutzfeld 7 zum freien Eintrag von Nutzdaten (payload) vor. In den Datenstrom DS1 sind nach einer (beispielsweise durch CCITT Rec.G.735 bis G.741, Vol. III, Fascicle III.3) vorgegebenen Vorschrift zur PDH-Rahmung beabstandete, 1 Byte breite Strukturdaten 10, 11 und 12 für einen Abschnitt 13 des Datenstroms DS1 unter Aufspaltung einiger ATM-Datenzellen 2 enthalten. Der Datenstrom DS1 wird deshalb nachfolgend als PDH-gerahmter ATM-Datenzellenstrom - kurz als gerahmter Datenstrom - bezeichnet. An das erste Datenübertragungssystem DU1 schließt sich ein Umsetzer 15 an, der den Datenstrom DS1 in einen nur aus ATM-Datenzellen 17, 18 und 19 bestehenden reinen ATM-Datenzellenstrom überführt, der einer Auswertung mit einer dazu geeigneten Meßeinrichtung zugänglich ist. Allerdings können Informationen über die Strukturdaten (z.B. Strukturdaten-Fehler) auf diese Weise nicht untersucht und die Strukturdaten auch nicht angezeigt werden.

Eine wesentliche Meßaufgabe bei Datenübertragungssystemen, die mit gerahmten Datenströmen arbeiten, besteht daher darin, auch die in dem ersten Datenstrom DS1 für die PDH-Rahmung enthaltenen Strukturdaten meßtechnisch zu erfassen, auszuwerten und ggf. auszugeben.

Zum besseren Verständnis eines PDH-gerahmten ATM-Datenzellenstromes DS1 ist in den Figuren 2 bis 4 der Aufbau eines entsprechenden PDH-Rahmens (vgl. CCITT,G.7zz, 2:G7xx.3) dargestellt, dessen Nutzbereich (530 Oktets) mit ATM-Datenzellen gefüllt ist. Dabei sind in Abweichung von der Darstellung in Figur 1 die jeweiligen ATM-Datenzellen mit Zellenkopf und Nutzfeld (z. B. 20, 21 in Abschnitten TS1 bis TS15 und TS 17 bis TS31) und die Strukturdaten (z. B. 23, 24 im Abschnitt TSO) in mehreren Zeilen Z1 bis Z6 angeordnet. Bei chronologischer Betrachtung folgt der Anfang der Zeile Z2 unmittelbar dem Ende der Zeile Z1 usw. Abschnitte TS16 können für Steuersignale reserviert sein. Wie die Figuren 3 und 4 jeweils für einen gerahmten Datenstrom DS1 mit 34 MBit/s zeigen, sind den jeweiligen Strukturdaten 30 (gemäß CCITT mit FA1,FA2,EM,TR,MA,NR,GC bezeichnet) jeweils entsprechende Abschnitte von ATM-Datenzellen (z.B. 530 Oktets Nutzbereich) zugeordnet. Figur 4 zeigt detailliert die gemäß CCITT festgelegten Inhalte der Strukturdaten-Abschnitte. Die ATM-Datenzellen sind in ihrem Zellenkopf und/oder Nutzfeld entsprechend von den Strukturdaten unterbrochen und geteilt.

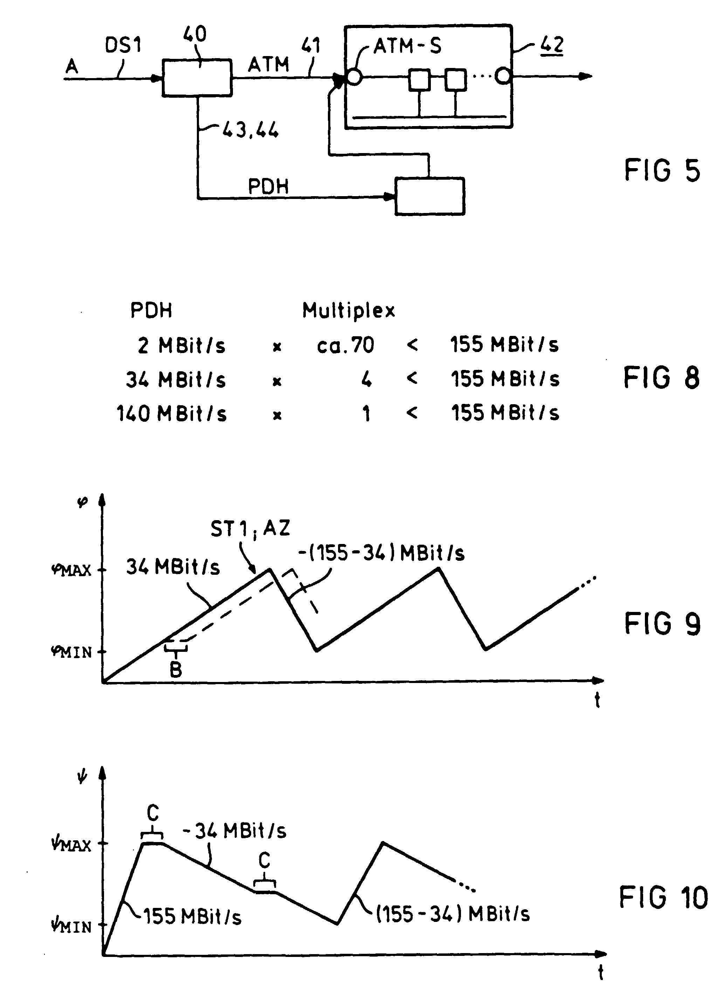

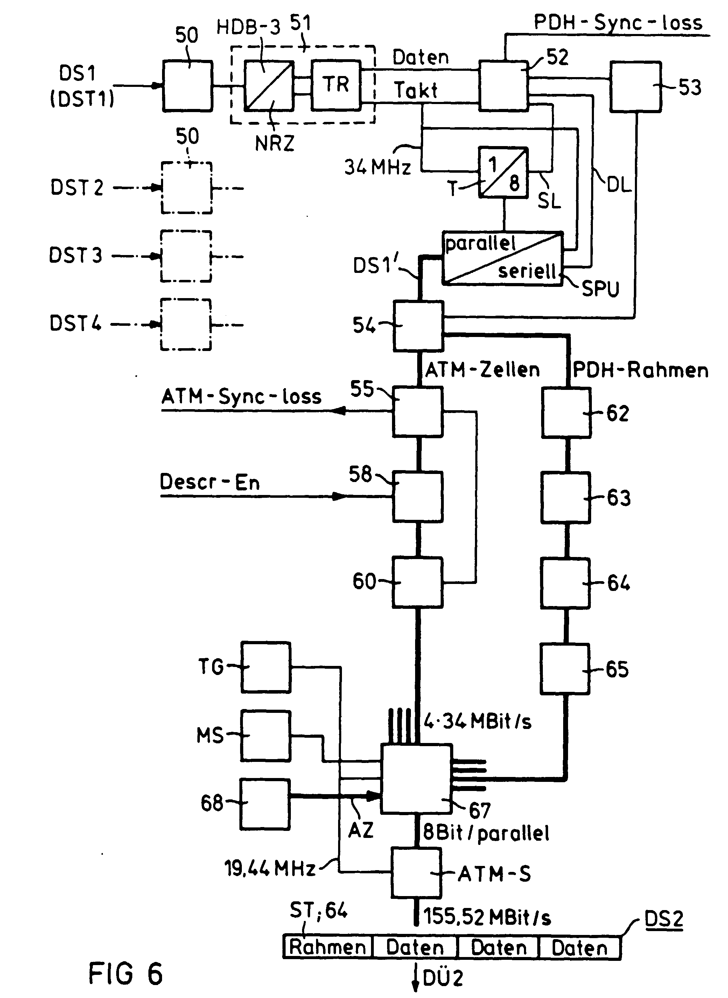

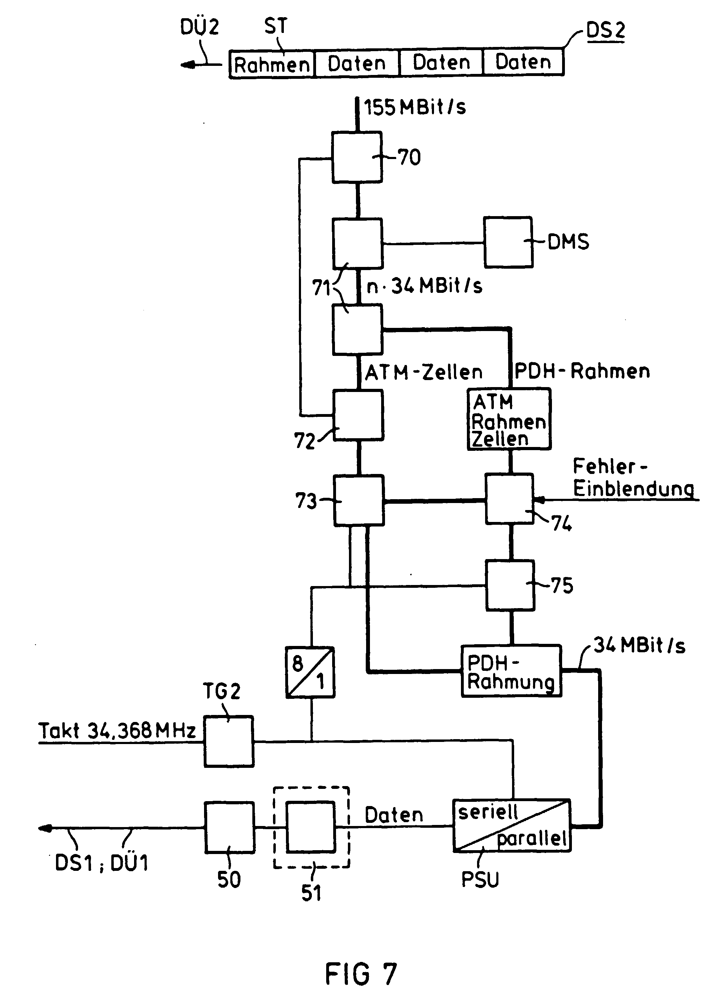

Wie Figur 5 zeigt, wird der am Punkt A (Figur 1) abgegriffene Datenstrom DS1 einem Umsetzer 40 zugeführt, der den Datenstrom DS1 nach ATM-Datenzellen einerseits und Strukturdaten andererseits separiert. Damit entsteht ein reiner ATM-Datenzellen-Strom 41, der unmittelbar einer für ATM-Datenzellen geeigneten Schnittstelle ATM-S einer Meß- oder Auswerteeinrichtung 42 zugeführt wird. Gleichzeitig überprüft und separiert der Umsetzer 40 die Strukturdaten des PDH-Rahmens und stellt ausgangsseitig die Strukturdaten 43 und aus einem Vergleich der Strukturdaten 43 mit vorgegebenen Strukturdaten gewonnene Meßergebnisse 44 zur Verfügung. Wie nachfolgend näher erläutert, werden die Strukturdaten 43 und die Meßergebnisse 44 in eine Strukturzelle mit ATM-Zellenformat eingeschrieben.

Figur 6 zeigt die Umsetzung des Datenstromes DS1 in einen Datenstrom DS2 für ein Datenübertragungssystem (Meßeinrichtung) DÜ2 mit einer Datenrate von 155 MBit/s. Der Datenstrom DS1 gelangt über eine Leitungsanpassung 50 zum Ausgleich der frequenzabhängigen Dämpfung der elektrischen Eingangsleitung an einen Dekoder 51 zum Umsetzen des verwendeten Leitungscodes (z.B. HDB-3-Signal) in den NRZ-Code (vgl. "Nachrichten-Meßtechnik", E.Schuon/H.Wolf, Springer-Verlag 1981, insbesondere Seite 237) mit Taktrückgewinnung TR zur Rückgewinnung des Takts von 34 MHz des Datenstroms DS1. Die umgesetzten NRZ-Daten und der rückgewonnene Takt werden separat einer Rahmen-Erkennungseinheit 52 mit bedarfsweiser Erzeugung eines Verlustsignals PDH-Sync-loss zugeführt. Die Rahmen-Erkennungseinheit 52 gibt beim Erkennen einer Rahmenkennung, die in den Strukturdaten enthalten ist, ein Signal an eine Rahmensteuerung 53 ab. In Kenntnis der Rahmenstruktur kann die Rahmensteuerung 53 Steuersignale erzeugen, die eine Unterscheidung der an einem Seriell/Parallel-Umsetzer SPU ausgangsseitig auftretenden Daten in Datenzellen und Strukturdaten ermöglichen.

Die Rahmen-Erkennungseinheit 52 ist über eine Synchronisierungsleitung SL mit einem 1:8-Teiler T zum Erzeugen von Oktetblocks synchronisiert. Beim Erkennen der PDH-Rahmenkennung wird der Teiler T derart synchronisiert, daß die NRZ-Daten über eine Datenleitung DL taktgemäß (34 MHz) seriell in den Umsetzer SPU eingelesen und entsprechend dem durch acht geteilten Takt (34/8 MHz) parallel oktetweise ausgelesen werden. Ein von der Rahmen-Steuerung 53 gesteuerter Demultiplexer 54 separiert gemäß der vorbekannten Vorschrift über die Rahmenbildung (CCITT) den eingehenden Datenstrom DS1' in ATM-Datenzellen (ATM-Zellen) und Strukturdaten (in Figur 6 mit PDH-Rahmen bezeichnet). Ein Zellensynchronisator 55 synchronisiert die aus dem Demultiplexer 54 kommenden ATM-Datenzellen auf die gewünschte ATM-Datenzellen-Struktur. Dadurch wird eine Information über die Lage des Datenzellenkopfes (header) gewonnen. Bei Nichtsynchronitat wird ein Signal ATM-Sync-loss ausgegeben. Die ATM-Datenzellen können - sofern sie vorab verwürfelt worden sind - über einen bedarfsweise mit einem Signal Descr-En aktivierbaren Descrambler 58 mit dem entsprechenden Polynom gemäß CCITT entwürfelt werden. Die ATM-Datenzellen werden unter Steuerung des Zellensynchronisators 55 in einen FIFO-Zellenspeicher 60 eingeschrieben. Parallel dazu werden die von dem Multiplexer 54 bereitgestellten Strukturdaten in einen FIFO-Speicher 62 eingeschrieben. Eine Rahmenauswertung 63 überprüft die Strukturdaten beispielsweise auf Konformität zu CCITT-Vorgaben. Die Überprüfungsergebnisse und die Strukturdaten selbst werden in eine Strukturzelle 64 mit ATM-Zellenformat (ATM-Rahmenzelle) eingeschrieben. Die Strukturzelle 64 wird in einem FIFO-Speicher 65 abgelegt.

Ein ATM-Zellen-Multiplexer 67 setzt durch entsprechenden Abruf der ATM-Datenzellen aus dem Zellenspeicher 60 und der Strukturzelle aus dem Speicher 65 einen zweiten Datenstrom DS2 für das Datenübertragungssystem DÜ2 mit 155 MBit/s zusammen. Durch synchrones Multiplexen von insgesamt vier der vorstehend beschriebenen Schaltungsanordnungen, die eingangsseitig jeweils mit einer Anzahl n=4 Teil-Datenströmen DST1, DST2, DST3 und DST4 mit einer Datenrate von jeweils 34 MBit/s beaufschlagt werden, wird zu jedem Nutzbereich jedes PDH-Rahmens (d. h. mehreren ATM-Datenzellen) die jeweils teildatenstrom-spezifische Strukturzelle ST mit ATM-Zellenformat eingefügt. Durch das synchrone Multiplexen bleibt die ursprüngliche Zellenverteilung in dem jeweiligen PDH-Rahmen auch bei Umsetzung in den Datenstrom DS2 unter der Voraussetzung erhalten, daß jeder Teildatenstrom DST1, DST2, DST3 und DST4 nur jeweils auf jede vierte ATM-Datenzelle im 155 MBit/s Datenstrom DS2 Zugriff besitzt. Dies wird durch den mit einem Takt von 19,44 MHz eines Taktgenerators TG beaufschlagten und mit einer Multiplexer-Steuerung MS verbundenen Multiplexer 67 in Verbindung mit einem Leerzellengenerator 68 gewährleistet, der beispielsweise nach der jeweiligen Strukturzelle 64 eine zur Anpassung der Datenraten notwendige Anzahl von Ausgleichszellen AZ zum Ausfüllen der unbesetzten Abschnitte in dem Datenstrom DS2 einspeist. Durch die 8 Bit parallele Verarbeitung bei 19,44 MHz ergibt sich die Datenrate von (gerundet) 155 MBit/s. Der so gebildete zweite Datenstrom DS2 (Rahmen = ATM-Rahmenzelle/Strukturzelle; Daten = ATM-Datenzelle) kann unmittelbar an die Schnittstelle ATM-S des Meßgerätes 42 weitergeleitet werden.

Die mit dem erfindungsgemäßen Verfahren mögliche Einbindung der Strukturdaten und/oder Meßergebnisse über ATM-Datenzellen in den zweiten Datenstrom ermöglicht, die Inhalte des PDH-Rahmens, den PDH-Rahmen und die Meßergebnisse in einer für reine ATM-Datenzellenströme geeigneten Einrichtung aufzuzeichnen und weiterzuverarbeiten.

Figur 7 zeigt im wesentlichen einen zur Darstellung in Figur 6 inversen Umwandlungsweg, bei dem der erste Datenstrom DS1 für das erste Datenübertragungssystem DÜ1 mit einer ersten Datenübertragungs-Geschwindigkeit (Datenrate) von 34 MBit/s aus dem zweiten, nur ATM-Datenzellen enthaltenden Datenstrom DS2 für das zweite Datenübertragungssystem DÜ2 mit einer zweiten, höheren Datenrate von 155 MBit/s (gerundet) unter Beibehaltung des ATM-Datenzellenformats gebildet wird. Der zweite Datenstrom DS2 enthält Strukturdaten, die in einer markierten oder markierbaren Strukturzelle ST im ATM-Zellenformat (ATM-Rahmenzelle = Rahmen) eingeschrieben sind. Die Strukturzelle ist in dem zweiten Datenstrom DS2 zum zumindest teilweisen Ausfüllen von infolge der unterschiedlichen Datenraten von 136 MBit/s (4 x 34 MBit/s) und 155 MBit/s entstehenden unbesetzten Abschnitten eingefügt. In gegenüber zur Darstellung in Figur 6 umgekehrter Weise werden aus dem zweiten Datenstrom DS2 die ATM-Strukturzellen (Rahmen) und die ATM-Datenzellen (Daten) nach einem Parallel-Interface 70 durch einen mit einer Steuerung DMS verbundenen Zellende-multiplexer 71 separiert; die ATM-Datenzellen werden über einen getakteten Verwürfler (Scrambler) 72 und einen ATM-Zellenspeicher 73 für den ersten Datenstrom DS1 aufbereitet. Parallel werden aus der Strukturzelle die Strukturdaten zur Bildung des PDH-Rahmens (ATM-Rahmenzelle) separiert. Über einen Rahmengenerator 74 können gezielt Fehler in die Strukturdaten eingeblendet werden, um beispielsweise die Reaktion eines zu messenden Systems zu prüfen.

Die separierten Strukturdaten werden in einem Rahmenspeicher 75 abgelegt und bedarfsweise zur Bildung des PDH-Rahmens (PDH-Rahmung) gemäß der vorgegebenen Vorschrift (CCITT) herangezogen. Bei dieser Verfahrensvariante werden also aus einem zweiten Datenstrom DS2 mit einer höheren Datenrate je nach Demultiplex-Potenz n des Zellendemultiplexers 71 (n*34 MBit/s) Datenströme für Übertragungssysteme mit einer niedrigeren Datenrate (34 MBit/s) erzeugt. Die Funktion der Leitungsanpassung 50, des Dekoders 51, eines Parallel-Seriell-Umsetzers PSU, eines 8:1-Umsetzers T2 und eines Taktgenerators TG2 entsprechen den im Zusammenhang mit Figur 6 beschriebenen Funktionen, wobei der Umsetzer PSU in umgekehrter Weise aus den Oktets serielle Daten bildet.

Figur 8 zeigt die Zusammenhänge der Datenraten, die sich durch die CCITT-Empfehlungen für Datenraten bei PDH-Systemen und bei reinen ATM-Datenzellen-Systemen ergeben. Für PDH-Systeme sind 2, 34 und 140 MBit/s empfohlen, so daß sich unter Einhaltung der für reine ATM-Datenzellen-Systeme als Datehrate vorgegebenen 155 MBit/s jeweils Multiplex bzw. De-multiplex-Faktoren von 70, 4 und 1 ergeben.

Figur 9 zeigt den Zusammenhang des Belegungsgrades ϕ des ATM-Datenzellen-Speichers 60 (Fig. 6) und der Umsetzungszeit t. Ohne Abruf von ATM-Datenzellen für den zweiten Datenstrom DS2 wird durch das Einschreiben von ATM-Datenzellen des Datenstroms DS1' (Figur 6) mit einer Datenrate von 34 MBit/s zunächst ein gewählter Anfangswert ϕ_{MAX} für den Belegungsgrad ϕ erreicht, der beispielsweise bei 2/3 der Speicherkapazität liegen kann. Speicher, die einen Belegungsgrad von 2/3 und 1/3 anzeigen, sind handelsüblich und können für diesen Zweck bevorzugt verwendet werden. In den Perioden, in denen Strukturdaten auftreten und in den FIFO-Speicher 62 eingeschrieben werden, bleibt die Speicherbelegung des ATM-Zellenspeichers 60 konstant (in Figur 9 nur gestrichelt angedeutete Periode B). Während des nachfolgenden Umsetzens (es wird weiter von einem 4:1-Multiplexer, d.h. von 4 Teildatenströmen DST1 bis DST4 (Figur 6) mit jeweils 34 MBit/s und einem zweiten Datenstrom DS2 mit 155 MBit/s ausgegangen) sinkt der Belegungsgrad ϕ gemäß der Differenz von eingeschriebenen ATM-Datenzellen zu ausgelesenen ATM-Datenzellen mit -(155-34) MBit/s ab. Die Speicheranfangsbelegung ϕ_{MAX} und die Speicherkapazitat sind dementsprechend so gewählt, daß bis zum Einfügen der nächsten Strukturzelle und ggf. weiterer Ausgleichszellen AZ ein zulässiger Mindest-Belegungsgrad ϕ_{MIN} nicht unterschritten wird. Nach Einfügen der nächsten Strukturzellen werden bedarfsweise solange Ausgleichszellen AZ in den zweiten Datenstrom eingefügt, bis der Belegungsgrad ϕ zumindest den Anfangsbelegungsgrad ϕ_{MAX} wieder erreicht. Bevorzugt können die Ausgleichszellen AZ vervielfachte Strukturzellen sein; die Ausgleichszellen AZ können auch zwischen den Strukturzellen angeordnet und dadurch einfach erkennbar sein.

Wie Figur 10 verdeutlicht, ist beim umgekehrten Umsetzen gemäß Figur 7 darauf zu achten, daß der Anfangsbelegungsgrad ψ _{MIN} und die Kapazität des weiteren Datenzellenspeichers 73 (Figur 7) so bemessen werden, daß ein Überschreiten eines Höchstbelegungsgrades ψ_{MAX} vermieden wird. Der Höchstbelegungsgrad ψ_{MAX} wird ohne gleichzeitiges Auslesen von ATM-Datenzellen zunächst mit einer Bitrate von 155 MBit/s erreicht. Während des anschließenden Auslesens sinkt der Belegungsgrad mit 34 MBit/s. Wegen des dann parallel erfolgenden Auslesens steigt der Belegungsgrad während der nächsten multiplexgesteuerten Einlesedauer um (155-34) MBit/s.

Während des Auftretens von Sturkturzellen ST (Figur 7) zur Bildung des PDH-Rahmens bleibt der Belegungsgrad des ATM-Zellenspeichers 73 konstant (Peride C).

## Patentansprüche

1. Verfahren zum Umsetzen digitaler Datenströme mit ATM-Zellenstruktur,
- bei dem ein erster Datenstrom (DS1) für ein erstes Datenübertragungs-System (DÜ1) mit einer ersten Datenübertragungs-Geschwindigkeit (Datenrate) unter Beibehaltung der zeitlichen Reihenfolge seiner ATM-Datenzellen in einen zweiten Datenstrom (DS2) für ein zweites Datenübertragungs-System (DÜ2) mit einer zweiten, höheren Datenrate umgesetzt wird,
-- wobei der erste Datenstrom (DS1) Datenzellen (2, 3, 4) im ATM-Zellenformat (ATM-Datenzellen) und Strukturdaten (10, 11, 12) enthält, wobei die Strukturdaten jeweils einem aus mehreren ATM-Datenzellen (2, 3, 4) bestehenden Abschnitt (13) zugeordnet und nach einer vorgegebenen Vorschrift in dem ersten Datenstrom (DS1) verteilt sind und
-- wobei der zweite Datenstrom (DS2) nur Zellen im ATM-Zellenformat enthält,
- bei dem die Strukturdaten (10, 11, 12) aus dem ersten Datenstrom (DS1) ausgesondert und für den jeweiligen Abschnitt (13) in eine markierte oder markierbare Strukturzelle (ST) mit ATM-Zellenformat eingeschrieben werden und
- bei dem die jeweilige Strukturzelle (ST) in den zweiten Datenstrom (DS2) zum zumindest teilweisen Ausfüllen eines unbesetzten Abschnitts eingefügt wird, der infolge der unterschiedlichen Datenraten entsteht.

2. Verfahren nach Anspruch 1, **dadurch gekennzeichnet, daß** die Strukturdaten (43) hinsichtlich vorgebbarer Kriterien ausgewertet werden und daß auch das Auswertungsergebnis (44) in die jeweilige Strukturzelle (ST) eingeschrieben wird.

3. Verfahren nach Anspruch 1 oder 2, **dadurch gekennzeichnet, daß** die ATM-Datenzellen (2, 3, 4) des ersten Datenstroms (DS1) in einen Zellenspeicher (60) eingeschrieben werden, dessen Belegungsgrad (ϕ) ermittelt wird, daß der Mindest-Anfangsbelegungsgrad (ϕ_{MIN}) so bemessen wird, daß bis zum Einfügen einer nächsten Strukturzelle (ST1...ST4) in den zweiten Datenstrom (DS2) ein zulässiger Mindest-Belegungsgrad (ϕ_{MIN}) nicht unterschritten wird und daß außer der oder den Strukturzelle(n) (ST1...ST4) bedarfsweise solange Ausgleichszellen (AZ) in den zweiten Datenstrom (DS) eingefügt werden, bis der Belegungsgrad (ϕ) zumindest den Mindest-Anfangsbelegungsgrad (ϕ_{MAX}) wieder erreicht.

4. Verfahren zum Umsetzen digitaler Datenströme mit ATM-Zellenstruktur,
- bei dem ein erster Datenstrom (DS1) für ein erstes Datenübertragungs-System (DÜ1) mit einer ersten Datenübertragungs-Geschwindigkeit (Datenrate) aus einem zweiten Datenstrom (DS2) für ein zweites Datenübertragungs-System (DÜ2) mit einer zweiten, höheren Datenrate unter Beibehaltung der zeitlichen Reihenfolge der ATM-Datenzellen des zweiten Datenstroms (DS2) gebildet wird,
-- wobei der erste Datenstrom (DS1) Datenzellen im ATM-Zellenformat (ATM-Datenzellen) und Strukturdaten enthält, die einem jeweils aus mehreren ATM-Datenzellen bestehenden Abschnitt zugeordnet und nach einer vorgegebenen Vorschrift in dem ersten Datenstrom (DS1) verteilt sind, und
-- wobei der zweite Datenstrom (DS2) nur Zellen im ATM-Zellenformat enthält,
- bei dem die jeweiligen abschnittsweise zugeordneten Strukturdaten für den ersten Datenstrom (DS1) in markierte oder markierbare Strukturzellen (ST) im ATM-Zellenformat eingeschrieben und bedarfsweise bearbeitet werden, die in den zweiten. Datenstrom (DS2) zum zumindest teilweisen Ausfüllen von infolge der unterschiedlichen Datenraten entstehenden unbesetzten Abschnitten eingefügt werden, und
- bei dem die Strukturdaten den Strukturzellen (ST) entnommen und gemäß der vorgegebenen Vorschrift in dem ersten Datenstrom (DS1) verteilt werden.

5. Verfahren nach Anspruch 4, **dadurch gekennzeichnet, daß** zur gezielten Änderung der Strukturdaten die Daten der Strukturzellen (ST) manipuliert werden.

6. Verfahren nach Anspruch 4 oder 5, **dadurch gekennzeichnet, daß** die ATM-Datenzellen des zweiten Datenstroms (DS2) in einen Zellenspeicher (73) eingeschrieben werden und daß der Anfangs-Belegungsgrad (ψ_{MIN}) und die Kapazität des Zellenspeichers (73) so bemessen werden, daß bis zum Auftreten der jeweils nächsten Strukturzelle (ST) und/oder gegebenenfalls Ausgleichs-Zelle(n) (AZ) ein Überschreiten eines Höchst-Belegungsgrades (ψ_{MAX}) vermieden wird.

7. Verfahren nach einem der vorangehenden Ansprüche, **dadurch gekennzeichnet, daß** der erste Datenstrom (DS1) im Zeitmultiplex aus mehreren Teil-Datenströmen (DST1...DST4) gebildet wird, wobei die Anzahl (n) der Teil-Datenströme (DST1...DST4) so bemessen wird, daß die Summe der Datenraten der Teil-Datenströme (DST1...DST4) zuzüglich jedem Teil-Datenstrom (DST1...DST4) individuell zugeordneter Strukturzellen (ST1...ST4) kleiner als die zweite oder gleich der zweiten Datenrate ist.

8. Verfahren nach einem der vorangehenden Ansprüche, **dadurch gekennzeichnet, daß** verbleibende unbesetzte Abschnitte in dem zweiten Datenstrom (DS2) durch Ausgleichszellen (AZ) aufgefüllt werden, die durch Vervielfachung der jeweiligen Strukturzelle (ST) gebildet werden.

9. Verfahren nach einem der vorangehenden Ansprüche, **dadurch gekennzeichnet, daß** die Strukturdaten einen PDH-Rahmen darstellen.

## Claims

1. Method for the conversion of digital data streams having an ATM-cell structure,
- wherein a first data stream (DS1) for a first data-transmission system (DÜ1) having a first data-transmission speed (data rate) is converted, while maintaining the temporal sequence of its ATM-data cells, into a second data stream (DS2) for a second data-transmission system (DÜ2) having a second higher data rate,
-- with the first data stream (DS1) containing data cells (2, 3, 4) in the ATM cell format (ATM-data cells) and structure data (10, 11, 12), with the structure data being associated with a respective section (13) which consists of a plurality of ATM-data cells (2, 3, 4) and being distributed in the first data stream (DS1) in accordance with a stipulated standard, and
-- with the second data stream (DS2) only containing cells in the ATM-cell format,
- wherein the structure data (10, 11, 12) is segregated from the first data stream (DS1) and, for the respective section (13), is written into a structure cell (ST) which is marked or is capable of being marked and has an ATM-cell format, and
- wherein the respective structure cell (ST) is inserted into the second data stream (DS2) in order to fill at least in part an unoccupied section which develops in consequence of the different data rates.

2. Method according to claim 1, characterised in that the structure data (43) is evaluated with regard to preselectable criteria and in that the evaluation result (44) is also written into the respective structure cell (ST).

3. Method according to claim 1 or 2, characterised in that the ATM-data cells (2, 3, 4) of the first data stream (DS1) are written into a cell memory (60), the occupancy level (ϕ) of which is determined, in that the minimum initial occupancy level (ϕ_{MIN}) is rated such that until the next structure cell (ST1...ST4) is inserted into the second data stream (DS2) there is no fall below a permissible minimum occupancy level (ϕ_{MIN}) and in that, besides the structure cell or cells (ST1...ST4), if necessary compensation cells (AZ) are inserted into the second data stream (DS) for so long until the occupancy level (ϕ) reaches at least the minimum initial occupancy level (ϕ_{MAX}) again.

4. Method for the conversion of digital data streams having an ATM-cell structure,
- wherein a first data stream (DS1) for a first data-transmission system (DÜ1) having a first data-transmission speed (data rate) is formed from a second data stream (DS2) for a second data-transmission system (DÜ2) having a second higher data rate while maintaining the temporal sequence of the ATM-data cells of the second data stream (DS2),
-- with the first data stream (DS1) containing data cells in the ATM cell format (ATM-data cells) and structure data which is associated with a respective section consisting of a plurality of ATM-data cells and is distributed in the first data stream (DS1) in accordance with a stipulated standard, and
-- with the second data stream (DS2) only containing cells in the ATM-cell format,
- wherein the respective structure data associated with the sections for the first data stream (DS1) is written into structure cells (ST), which are marked or capable of being marked, in the ATM-cell format and, if necessary, are processed, which structure cells are inserted into the second data stream (DS2) in order to fill at least in part unoccupied sections which develop in consequence of the different data rates, and
- wherein the structure data is taken from the structure cells (ST) and distributed in the first data stream (DS1) in accordance with the stipulated standard.

5. Method according to claim 4, characterised in that the data of the structure cells (ST) is manipulated in order to change the structure data in a controlled manner.

6. Method according to claim 4 or 5, characterised in that the ATM-data cells of the second data stream (DS2) are written into a cell memory (73) and in that the initial occupancy level (Ψ_{MIN}) and the capacity of the cell memory (73) are rated such that until the next respective structure cell (ST) and/or, if applicable, compensation cell or cells (AZ) occurs or occur a situation where a maximum occupancy level (Ψ_{MAX}) is exceeded is avoided.

7. Method according to one of the preceding claims, characterised in that the first data stream (DS1) is formed using time-division multiplexing from a plurality of partial data streams (DST1...DST4), with the number (n) of the partial data streams (DST1...DST4) being rated such that the sum of the data rates of the partial data streams (DST1...DST4) plus structure cells (ST1...ST4) individually associated with each partial data stream (DST1...DST4) is smaller than the second data rate or is equal to the second data rate.

8. Method according to one of the preceding claims, characterised in that remaining unoccupied sections in the second data stream (DS2) are filled by compensation cells (AZ) which are formed by multiplication of the respective structure cell (ST).

9. Method according to one of the preceding claims, characterised in that the structure data represents a PDH-frame.

## Revendications

1. Procédé pour convertir des flux de données numériques ayant une structure de cellules ATM,
- selon lequel on convertit un premier flux de données (DS1) pour un premier système de transmission de données (DÜ1) ayant une première vitesse de transmission de données (débit de données), en conservant la suite temporelle de ses cellules de données ATM, en un second flux de données (DS2) pour un second système de transmission de données (DÜ2) ayant un second débit de données, plus élevé,
-- le premier flux de données (DS1) contenant des cellules de données (2, 3, 4) au format de cellules ATM (cellules de données ATM) et des données de structure (10, 11, 12), les données de structure étant associées à une section (13) constituée de plusieurs cellules de données ATM (2, 3, 4) et étant réparties dans le premier flux de données (DS1) selon une règle prescrite, et
-- le second flux de données (DS2) ne contenant que des cellules au format de cellules ATM,
- selon lequel on extrait les données de structure (10, 11, 12) du premier flux de données (DS1) et on les enregistre pour la section (13) considérée dans une cellule de structure (ST), repérée ou pouvant être repérée, au format de cellules ATM, et
- selon lequel on insère la cellule de structure (ST) considérée dans le second flux de données (DS2) pour remplir au moins partiellement une section inoccupée qui est apparue en raison des différents débits de données.

2. Procédé selon la revendication 1, caractérisé par le fait que l'on évalue les données de structure (43) en fonction de critères qui peuvent être prescrits et on enregistre aussi le résultat d'évaluation (44) dans la cellule de structure (ST) considérée.

3. Procédé selon la revendication 1 ou 2, caractérisé par le fait que l'on enregistre les cellules de données ATM (2, 3, 4) du premier flux de données (DS1) dans une mémoire de cellules (60) dont on détermine le degré d'occupation (ϕ), que le degré initial minimal d'occupation (ϕ_{MIN}) est tel que, jusqu'à l'insertion d'une prochaine cellule de structure (ST1 à ST4) dans le second flux de données (DS2), on ne passe pas sous un degré minimal autorisé d'occupation (ϕ_{MIN}) et que, en dehors de la ou des cellules de structure (ST1 à ST4), on insère selon les besoins des cellules de compensation (AZ) dans le second flux de données (DS2) jusqu'à ce que le degré d'occupation (ϕ) atteigne de nouveau au moins le degré initial minimal d'occupation (ϕ_{MAX}).

4. Procédé pour convertir des flux de données numériques ayant une structure de cellules ATM,
- selon lequel on forme un premier flux de données (DS1) pour un premier système de transmission de données (DÜ1) ayant une première vitesse de transmission de données (débit de données) à partir d'un second flux de données (DS2) pour un second système de transmission de données (DÜ2) ayant un second débit de données plus élevé, en conservant la suite temporelle des cellules de données ATM du second flux de données (DS2),
-- le premier flux de données (DS1) contenant des cellules de données au format de cellules ATM (cellules de données ATM) et des données de structure qui sont associées à une section (13) constituée de plusieurs cellules de données ATM et qui sont réparties dans le premier flux de données (DS1) selon une règle prescrite, et
-- le second flux de données (DS2) ne contenant que des cellules au format de cellules ATM,
- selon lequel on enregistre, et on traite si besoin est, les données de structure, associées par sections, pour le premier flux de données (DS1) dans des cellules de structure (ST) au format de cellules ATM qui sont repérées ou peuvent être repérées et qui sont insérées dans le second flux de données (DS2) pour remplir au moins partiellement des sections inoccupées apparues en raison des différents débits de données, et
- selon lequel on extrait des cellules de structure (ST) les données de structure et on les répartit dans le premier flux de données (DS1) selon la règle prescrite.

5. Procédé selon la revendication 4, caractérisé par le fait que, pour modifier de manière voulue les données de structure, on manipule les données des cellules de structure (ST).

6. Procédé selon la revendication 4 ou 5, caractérisé par le fait que l'on enregistre les cellules de données ATM du second flux de données (DS2) dans une mémoire de cellules (73) et on choisit le degré initial d'occupation (Ψ_{MIN}) et la capacité de la mémoire de cellules (73) de telle sorte que, jusqu'à l'apparition de la prochaine cellule de structure (ST) et/ou éventuellement de la ou les cellules de compensation (AZ), on évite un dépassement d'un degré maximal d'occupation (Ψ_{MAX}).

7. Procédé selon l'une des revendications précédentes, caractérisé par le fait que l'on forme le premier flux de données (DS1), en multiplexage temporel, à partir de plusieurs flux partiels de données (DST1 à DST4), le nombre (n) de flux partiels de données (DST1 à DST4) est choisi tel que la somme des débits de données des flux partiels de données (DST1 à DST4) en plus des cellules de structures (ST1 à ST4) associées individuellement à chaque flux partiel de données (DST1 à DST4) est inférieure ou égale au second débit de données.

8. Procédé selon l'une des revendications précédentes, caractérisé par le fait que l'on remplit des sections restant inoccupées dans le second flux de données (DS2) de cellules de compensation (AZ) qui sont formées par une multiplication de la cellule de structure (ST) considérée.

9. Procédé selon l'une des revendications précédentes, caractérisé par le fait que les données de structure représentent une trame PDH.
